# EUROPEAN PATENT APPLICATION

(11) **EP 3 086 433 A1**
(43) Date of publication of application: **26.10.2016**
(21) Application number: 14880058.4
(22) Date of filing: 29.05.2014
(51) Int. Cl.: H02J 7/00

(54) **CHARGING METHOD, ALTERNATING CURRENT ADAPTOR, CHARGING MANAGEMENT DEVICE AND TERMINAL**

(30) Priority: 21.01.2014 CN 201410026213
(71) Applicant: ZTE Corporation, Shenzhen, Guangdong 518057 (CN)
(72) Inventor: HU, Dongping, Shenzhen Guangdong 518057 (CN); WANG, Jihong, Shenzhen Guangdong 518057 (CN)
(74) Representative: Schröer, Gernot H.
(86) International application number: PCT/CN2014/078807
(87) International publication number: WO 2015/109718

(57) **Abstract**

A charging method, an alternating current adapter, a charging management device and a terminal are disclosed. The alternating current adapter includes a micro-USB connector used to connect to an external terminal and charge the external terminal; a conversion module used to convert the accessed alternating current into the direct current to be output to the micro-USB connector as an output and boost a voltage to a designated value after receiving a voltage boosting instruction; a changeover switch used to connect two differential signal lines of the micro-USB connector to a resistor by normal default, and detects whether the two differential signal lines are in a short-circuit state when the micro-USB connector is connected to the external terminal, if so, trigger a control module and disconnect the two differential signal lines from the resistor; and the control module used to send the voltage boosting instruction to the conversion module after being triggered. The above technical scheme may realize the quick charging of a lithium battery of a mobile portable electronic product.

## Description

### Technical Field

The present invention relates to the technical field of battery supply charging, more particularly, it fits to mobile portable electronic products supplied by batteries, and specifically relates to a charging method, an alternating current (AC) adapter, a charging management device and a terminal based on a Universal Serial Bus (USB) interface.

### Background of the Related Art

Mobile portable electronic products are favored by more and more consumers, and become essential living tools in people's daily life. People expect that this kind of living tool can be used anytime and anywhere, and a target pursued by people is convenience and fast. However, in today's consumer battery products, a battery is easily to be consumed, needs to be charged frequently, and the charging time is relatively long, which becomes a big trouble during people using mobile portable electronic products supplied by the batteries. On this background, a fast/slow adaptive and intelligent charging method and device based on a USB interface is provided according to a basic principle of quick charging. The basic principle of the quick charging is described in brief as follows:
as mentioned above, functions of the mobile portable products supplied by batteries are powerful and frequently used by users, thereby a capacity required by the supply batteries is getting larger and larger. For example, the battery capacity of a smart phone is mostly 2000MAh and above, and the battery capacity of a portable WI-FI and 3G/4G Internet-enabled device with a USB interface is even 4000MAh and above. If a mainstream USB interface is used as a charger interface, a typical value of a charging voltage is 5.0V, and a typical charging current of standard USB downstream port is 100mA/500mA/ 90 mA, and the charging current is defined according to a protocol type supported by the USB interface and is mostly between 1A to 1.5A based on an AC adapter of a USB interface connector. Besides, the current carried by the mainstream standard micro-USB interface is about 1A. If a current of 1A is used to charge, a battery with a capacity of 2000MAh needs to be charged for about 2.5 hours and a battery with a capacity of 4000MAh needs to be charged for about 4.5 hours. The greater the capacity of a battery is, the longer the charging time duration is.

Therefore, if quick charging is to be achieved, the charging current of the battery can be increased, and an input current of a charging management chip can be increased accordingly. However, the input current of the charging management chip may exceed a rated operational current of a micro-USB connector, that is, the input current of the charging management chip may be beyond a through-current capability of the micro-USB connector, thereby the USB connector may be destroyed.

### Summary of the Invention

The technical problem to be solved by the embodiment of the present invention is to provide a charging method, an AC adapter, a charging management device and a terminal to realize quick charging for lithium batteries of the mobile portable electronic products.

In order to solve the above technical problem, following technology solutions is adopted:
an alternating current adapter, comprising a micro- Universal Serial Bus (USB) connector, a conversion module, a changeover switch and a control module, hereinto:
the micro-USB connector, is configured to connect to an external terminal and charge the external terminal;
the conversion module, connecting with a power supply pin of the micro-USB connector, is configured to convert an accessed alternating current to a direct current, output the direct current to the micro-USB connector as an output, and boost a voltage to a designated value after receiving a voltage boosting instruction from the control module;
the changeover switch, is configured to connect two differential signal lines of the micro-USB connector to a resistor under a normal default situation, and when the micro-USB connector is connected to the external terminal, detect whether the two differential signal lines of the micro-USB connector are in a short-circuit state, if the two differential signal lines of the micro-USB connector are in the short-circuit state, trigger the control module and disconnect the two differential signal lines of the micro-USB connector from the resistor; and
the control module, is configured to send the voltage boosting instruction to the conversion module after the control module is triggered.

Alternatively, the changeover switch is further configured to, if the external terminal is detected to disconnect from the micro-USB connector or the external terminal is detected to complete the charging, notify the control module and connect the two differential signal lines of the micro-USB connector to the resistor;
the control module is further configured to, after receiving a notification, send a voltage recovery instruction to the conversion module; and
the conversion module is further configured to, after receiving the voltage recovery instruction, adjust the voltage to a default value.

Alternatively, a value of the resistor is 0 Ohm or less than 100 Ohms.

A charging method, applied to any of the above mentioned alternating current adapter, comprising:
accessing an alternating current adapter to a terminal;
detecting, by the alternating current adapter, whether the terminal supports quick charging; if the terminal does not support the quick charging, charging the terminal with an default output voltage; if the terminal supports the quick charging, boosting the output voltage to a designated value to charge the terminal.

Alternatively, the step of detecting, by the alternating current adapter, whether the terminal supports the quick charging comprises:
detecting, whether two differential signal lines of a micro-USB connector connected to the terminal are in a short-circuit state; if the two differential signal lines of the micro-USB connector are in the short-circuit state, determining that the terminal supports the quick charging; otherwise, determining that the terminal does not support the quick charging.

A charging management device, applied to a terminal, comprising a micro-Universal Serial Bus (USB) connector, a changeover switch and a control module, hereinto:
the micro-USB connector, is configured to connect to a charging device and charge a terminal;
the changeover switch, is configured to connect two differential signal lines of the micro-USB connector to the control module under a default situation, and connect the two differential signal lines of the micro-USB connector to a resistor after receiving a switching signal form the control module; and
the control module, is configured to detect whether a charging device connected to the micro-USB connector is an alternating current adapter. If the charging device is the alternating current adapter, output the switching signal to the changeover switch.

Alternatively, the control module is further configured to if the terminal is detected to complete the charging or the micro-USB connector is detected to disconnect from the charging device, notify the changeover switch; and
the changeover switch is further configured to, after receiving a notification, connect the two differential signal lines of the micro-USB connector to the control module;

Alternatively, a value of the resistor is 0 Ohm or less than 100 Ohms.

A terminal, comprising any of the above mentioned charging management device.

A charging method, applied to any of the above mentioned charging management device, comprising:
detecting, by a charging management device, a type of an accessed device;
if the accessed device is detect to be an alternating current adapter, sending, by the charging management device, a quick charging identifier to the alternating current adapter.

Alternatively, the step of sending, by the charging management device, a quick charging identifier to the alternating current adapter comprises:
connecting, by the charging management device, two differential signal lines of a micro- Universal Serial Bus (USB) connector connected to the alternating current adapter to a resistor, wherein a value of the resistor is 0 Ohm or less than 100 Ohms.

The major advantages with respect to the related technologies of the above mentioned charging method, alternating current adapter, charging management device and terminal reflect on following aspects. It can be realized simply and easily only by adding a bus changeover switch on a traditional charging adapter and a charging load; a quick charging mode realized by a USB connector port manner can be applicable to the charging requirements of mobile portable electronic products, and the technology is easy to be promoted; the USB battery charging specification is followed, and with respect to the related technologies like voltage comparing, pulse group detection and pulse counting manners, the reliability is much better; the method and physical implementation way of the embodiments of the present invention can easily form a standardized specification; and the embodiments of the present invention can also implement a bus communication between a charger and a charging load to realize a more intelligent charging manner in relevant summary of invention and embodiments.

### Brief Description of the Drawings

FIG. 1 is a schematic diagram of an AC adapter according to an embodiment of the present invention;
FIG. 2 is a flow chart of a charging method executed by the AC adapter side according to an embodiment of the present invention;
FIG. 3 is a schematic diagram of a basic principle of an intelligent charging switch according to an embodiment of the present invention;
FIG. 4 is a schematic diagram of an AC adapter according to an application example of the present invention;
FIG. 5 is a flow chart of a charging method executed by an AC adapter according to an application example of the present invention;
FIG. 6 is a schematic diagram of a charging management device according to an embodiment of the present invention;
FIG. 7 is a flow chart of a charging method executed by the charging management device side according to an embodiment of the present invention;
FIG. 8 is a schematic diagram of a charging load according to an application example of the present invention;
FIG. 9 is a flow chart of a charging method executed by a charging load according to an application example of the present invention.

### Preferred Embodiments of the Invention

The embodiments of the present invention are described in details with reference to the accompanying drawings hereinafter. It should be illustrated that, in the case of not conflicting, the embodiments in the present application and features in these embodiments can be combined with each other arbitrarily.

To realize quick charging, the charging current of the battery can be increased, and an input current of a charging management chip can be increased accordingly. However, the input current of the charging management chip may exceed a rated operational current of a micro-USB connector. That is, the input current of the charging management chip may be beyond a through-current capability of the micro-USB connector, thereby the USB connector may be destroyed. Therefore, the embodiments in the present application adopt to remain the current absorbed by the AC adapter side unchanged, for example remain to be about 1A, but to increase an input voltage of the USB interface. That is, input power of the charging management chip (e.g. output power of the AC adapter) can be increased, thus the charging current of the battery can be increased, and a quick charging function of a lithium battery can be realized.

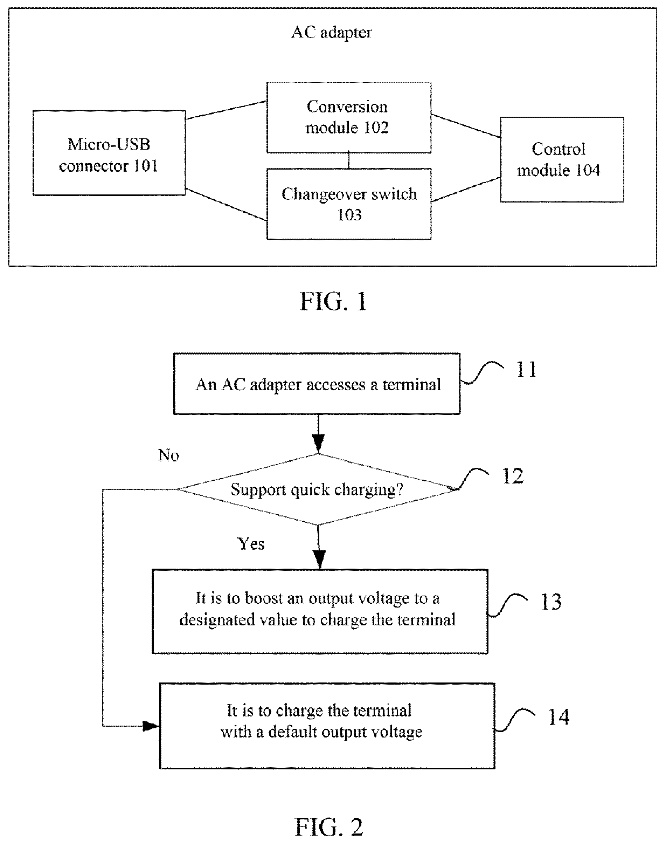

FIG. 1 is a schematic diagram of an AC adapter according to an embodiment of the present invention. As shown in FIG. 1, the AC adapter in the embodiment includes that:
a micro-USB connector 101, is configured to connect to an external terminal and charge the external terminal;
a conversion module 102, connecting to a power pin of the micro-USB connector, is configured to convert the accessed alternating current to the direct current, output the direct current to the micro-USB connector as an output, and boost a voltage to a designated value after receiving a voltage boosting instruction from a control module;
a changeover switch 103, is configured to connect two differential signal lines of the micro-USB connector to a resistor under a normal default situation, and when the micro-USB connector is connected to the external terminal, detect whether the two differential signal lines of the micro-USB connector are in a short-circuit state; if the two differential signal lines of the micro-USB connector are in the short-circuit state, to trigger the control module and disconnect the two differential signal lines of the micro-USB connector from the resistor; and
the control module 104, is configured to send the voltage boosting instruction to the changeover switch after triggered by the changeover switch.

In an alternative embodiment, the changeover switch is further configured to, if the external terminal is detected to disconnect from the micro-USB connector or the external terminal is detected to complete the charging, notify the control module and connect the two differential signal lines of the micro-USB connector to the resistor;
the control module 104 is further configured to, after receiving a notification, send a voltage recovery instruction to the conversion module 102; and
the conversion module 102 is further configured to, after receiving the voltage recovery instruction, adjust the voltage to a default value.

FIG. 2 is a flow chart of a charging method executed by the AC adapter side in an embodiment of the present invention, as shown in FIG. 2, and the method in the embodiment includes the following steps.

In step 11, the AC adapter accesses to the terminal.

In step 12, the AC adapter detects whether the terminal supports the quick charging; if the terminal is detected not to support the quick charging, it is proceeded to step 13; if the terminal is detected to support the quick charging, it is proceeded to step 14.

In step 13: the AC adapter boosts the output voltage to a designated value and charges the terminal with the increased output voltage.

In step 14: the AC adapter charges the terminal with a default output voltage.

On the basis of a traditional USB charging management method, the embodiment adopts a kind of a bus changeover switch (e.g., an LC824206/205 chip and the like, or an intelligent bus switch in the embodiment integrated in exiting charging management chips and AC adapter control chips), and implements a fast/slow adaptive and intelligent charging method for the USB interface via the intelligent Bus switch and peripheral circuits thereof. The intelligent changeover switch is described briefly as follows (which includes, but is not limited to the LC824206/205 chip).

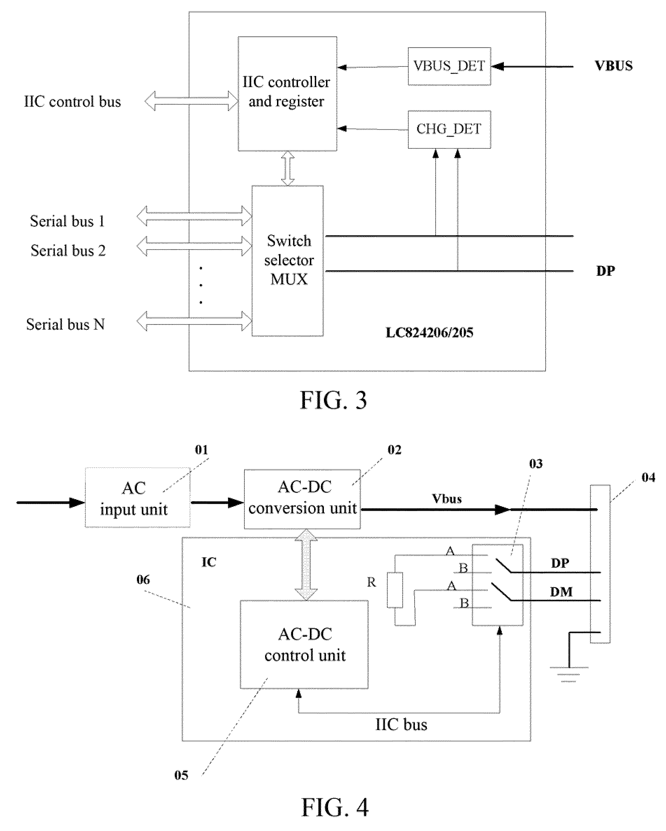

A schematic and connection relationships of function units of the intelligent bus changeover switch are shown in FIG. 3. Basic function units of the intelligent bus changeover switch include an Inter-Integrated Circuit (IIC) bus controller, a bus physical circuit selector (e.g. a Multiplexer Unit, MXU), a CHG-DET, and a VBUS-DET. Basic functions of the intelligent bus changeover switch include that: (a), whether there is a VBUS (a voltage of the USB) signal can be detected; (b), whether two differential signals DP and DM of the USB (DM and DP are two differential signals if the USB, which are also called D- and D+) are in a short-circuit state can be detected; (c), whether DP and DM insert to an AC adapter or a USB standard downstream port can be detected; (d), the above functions can be enabled/disabled through the IIC Bus, and physical circuits of DP and DM can be controlled to connected to serial Bus 1 or serial Bus N through the IIC Bus; and (e) a detection result and switching states of the physical circuits of DP and DM can be read through the IIC Bus.

As shown in FIG. 4, an AC adapter in an application example of the present invention includes an AC (110V/220V) input unit 01, an AC-DC conversion unit 02, an intelligent Bus changeover switch 03, a micro-USB connecter 04, and an AC-DC control module 05.

As shown in FIG. 4, the AC input unit 01 can be an input of mains electricity standard of 220V in China or a mains electricity standard of 110V in Europe and America, and circuit of the AC input unit can further include function circuits such as an Electro Magnetic Compatibility (EMC) overvoltage or an overcurrent protection circuit.

The AC-DC conversion unit 02 can achieve a conversion output from the alternating current (AC) to the direct current (DC). The circuit of the AC-DC conversion unit can output two or more than two kinds of voltages, and the output power can be adjustable and also can be controlled by the AC-DC control module 05. An output voltage range can be, but is not limited to, a typical voltage value of 5V/9V/12V. An output current can be, but is not limited to, a typical current value of 500mA, 900mA, 1A, 1.2A, and 1.5A, which depends specific implementations. In an uncontrollable default state, the AC-DC conversion unit 02 outputs a typical value of 5V@1A.

The AC-DC control unit 05 has capabilities of Universal Asynchronous Receiver / Transmitter (UART), IIC, USB and other bus interface communication capabilities, and further has General Purpose Input /Output (GPIO) interfaces. This function unit can achieve several basic functions as follows: controlling the output power of the AC-DC conversion unit 02 (that is, the current and voltage output from the AC-DC conversion unit 02 can be adjusted); achieving interface communication function, and reading and setting the state and key parameters of an intelligent changeover switch.

An Application-Specific Integrated Circuit 06 which is formed by integrating the functions units of AC-DC control unit 05 and intelligent bus changeover switch 03 in an Integrated Circuit (IC) in an embodiment of the present invention, is dedicated on the AC adapter side in the embodiment of the present invention, and forms a function chipset with the charging management IC (chip) in the embodiment of the present invention. Meanwhile, the above AC-DC controller unit 05 and intelligent bus changeover switch 03 can also be realized through the general IC or other circuit elements respectively.

An alternating current input line of 220V/110V connects to the AC input unit 01, and the output of the AC input unit 01 connects to the input of the AC-DC conversion unit 02. The alternating current of 220V/1 10V is converted to the direct current VBUS by the AC-DC conversion unit 02. The direct current VBUS connects to the power supply pin of the micro-USB connector that acts an output of the AC adapter. The physical lines of the DP and DM on the micro-USB connector 04 connect to the corresponding DP and DM pins on an USB interface of the intelligent Bus changeover switch 03, the bus A of the intelligent bus changeover switch 03 externally connects to a resistor R (0 Ohm or less than 100 Ohms), in a default state, the DP and DM pins of the intelligent bus changeover switch 03 connect to the bus A. An IIC bus interface of the intelligent bus changeover switch 03 connects to an IIC bus interface of the AC-DC control module 05, and the AC-DC control module 05 connects to the AC-DC conversion unit 02 to control the output power of the AC-DC conversion unit 02.

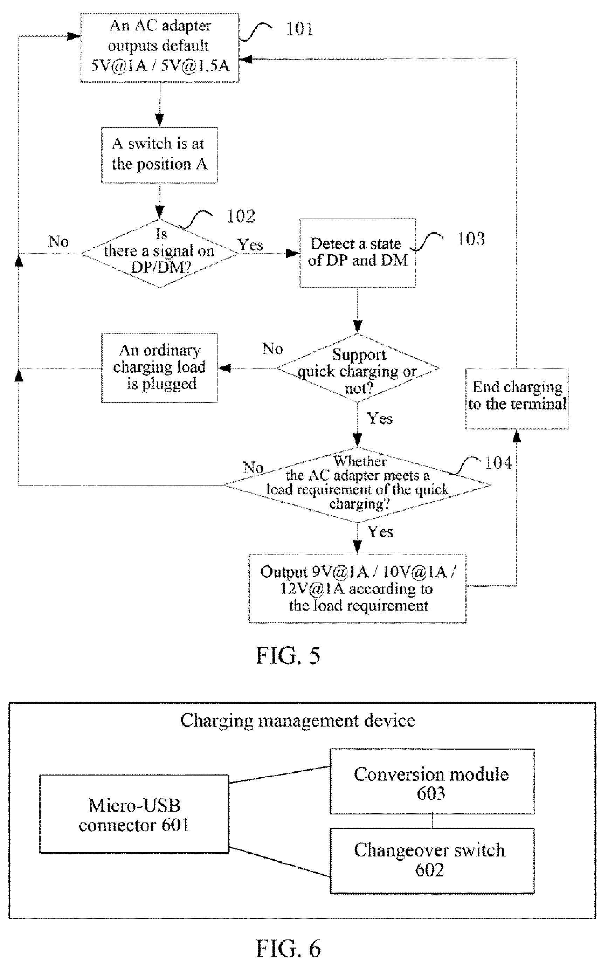

FIG. 5 is a flow chart of a charging method executed by an AC adapter according to an application example of the present invention. As shown in FIG. 5, the charging method includes the following steps:
in step 101, the VBUS on the AC adapter outputs 5V@1.5A/5V@1A by default, and the intelligent bus changeover switch 03 switches to the position A by default;
in step 102, the AC adapter detects whether there is a signal from the DP or DM; if there is no signal, the default state is maintained; if there is the signal, the AC adapter detects the states of DP and DM, and it is proceeded to step 103;
if there is an external charging load plugged into the micro-USB connecter 04, the intelligent bus changeover switch 03 detects whether DP and DM are in a short-circuit state and sends the detection result. The sent detection result is read by the AC-DC control module to execute corresponding controlling actions.

If the changeover switch 03 detects that the DP and DM are in the short-circuit state, it needs to disconnect from the position A, and connects to the position B.

In step 103, the AC adapter determines whether the charging load supports quick charging; if the charging load does not support the quick charging, that represents that the plugged charging load is an ordinary charging load, and the default state is maintained; if the charging load supports the quick charging, it is proceeded to step 104.

The AC-DC control module 05 reads reliable detection result through the IIC Bus, if the DP and DM are not in the short-circuit state, the AC-DC control module 05 determines that the charging load plugged into the micro-USB connecter 04 is the ordinary charging load which does not support a quick charging mode, and enters into a slow charging mode. Then the AC-DC control module 05 controls the AC-DC conversion unit 02 to output the default value 5V@1.5A/5V@1A according to the slow charging mode. If the reliable detection result read is that the DP and DM are in the short-circuit state, the AC-DC control module 05 determines that the charging load plugged into the micro-USB connecter 04 supports the quick charging mode, and enters into the quick charging mode.

In step 104, if the AC adapter meets quick charging requirements of the charging load, the AC adapter executes the quick charging to the charging load.

Then the AC-DC control module 05 controls the AC-DC conversion unit 02 to output 9V@1.5A/5V@1A or 12V@1.5A/5V@1A, etc., according to the quick charging mode.

FIG. 6 is a schematic diagram of a charging management device according to an embodiment of the present invention. The charging management device (e.g. lithium battery charging management device of mobile portable electronic products, hereinafter as charging load for short) in the embodiment is installed in a terminal, including that:
a micro-USB connector 601, is configured to connect to a charging device and charge the terminal;
a changeover switch 602, is configured to connect two differential signal lines of the micro-USB connector to a control module under a default situation, and after receiving a switching signal from the control module, connect the two differential signal lines of the micro-USB connector to a resistor; and
a control module 603, is configured to detect whether the charging device connected to the micro-USB connecter is the AC adapter, and send the switching signal to the changeover switch if the charging device is the AC adapter.

In an alternative embodiment, the control module is further configured to, if the terminal is detected to complete the charging or the micro-USB connector is detected to disconnect from the charging device, notify the changeover switch ; and
the changeover switch is further configured to, after receiving a notification, connect the two differential signal lines of the micro-USB connector to the control module.

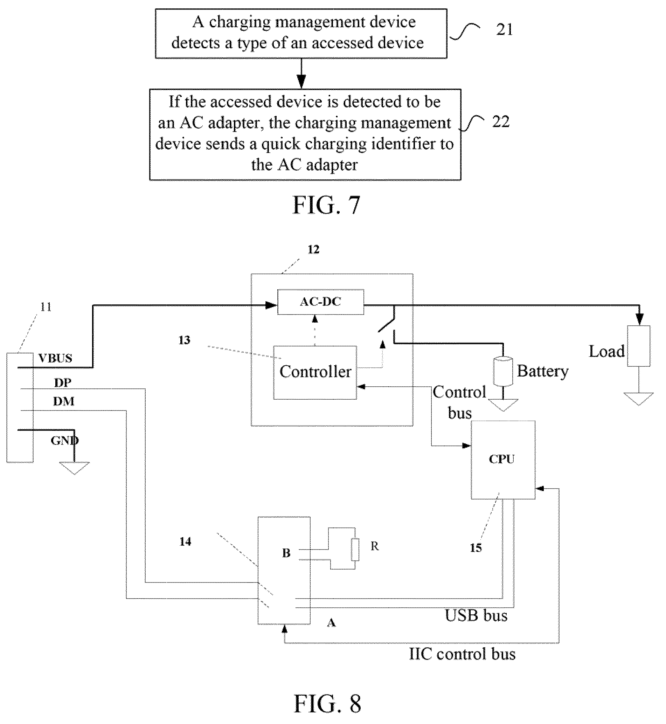

FIG. 7 is a flow chart of a charging method executed by the charging management device side according to an embodiment of the present invention. As shown in FIG. 7, the method including the following steps.

In step 21, the charging management device detects a type of an accessed device.

In step 22, if the accessed device is detected to be an AC adapter, the charging management device sends a quick charging identifier to the AC adapter.

FIG. 8 is a schematic diagram of a charging load according to an application example of the present invention. The charging load in the embodiment supports a quick charging mode and a slow charging mode, and the charging load includes: a micro-USB connecter 11, a charging management IC (Chip) 12, a system load, a battery, a Central Processing Unit (CPU) small system 15, and an intelligent bus changeover switch 14.

Thereinto, the micro-USB connecter 11 conforms to the electrical specification for USB interfaces. The charging management chip 12 supports high voltage input and satisfies a function for charging high voltage battery. The intelligent Bus changeover switch 14 in the embodiment of the present invention is switched to a position A in a default state, and the DP and DM on the micro-USB connecter 11 interconnects to the USB interface of the main CPU 15, for realizing the detection whether an charger plugged into the portable electronic product is a USB downstream port or an AC adapter with the USB connecter. When the main CPU 15 identifies that the plugged charger is the AC adapter, the CPU 15 outputs a switching control signal for controlling the two signal lines DP and DM on the micro-USB connecter 11 to be switched to the position of a bus B. The Bus B externally connects to a resistor with small resistance which can be approximately regarded as a short-circuit state, meanwhile, the AC adapter side identifies that the accessed charging load supports the quick charging mode through monitoring the state of the DP and DM. The AC adapter switches the output power accordingly, for example, adjusting from 5V@1A to 9V@1A/12V@1A to realize the quick charging function.

In addition, the intelligent bus changeover switch 14 can be integrated in the charging management chip 12, to form the application specific IC in the embodiment of the present invention. This IC can be dedicated on the charging load side in the embodiment, and forms the function chipset with the IC of the AC side in the embodiment of the present invention.

The power supply pin of the micro-USB connecter 11 is connected to an input pin VIN of the charging management IC 12, and the power output of the charging management IC 12 is connected to the charging battery, the system load, and the CPU small system 15. The DP and DM signal pins of the micro-USB connecter 11 correspondingly are connected to the DP and DM physical pins of the intelligent bus changeover switch 14. The intelligent bus changeover switch 14 is at the position A by default. The external pin of the A interface is connected to the USB interface pin of the CPU small system 15. The B interface is externally connected to the resistor R (0 ohm or less than 100 ohms), and the IIC Bus interface of intelligent Bus changeover switch 14 is connected to the IIC bus interface pin of the CPU small system 15.

At present, the working state of a lot of charging management ICs can be read by a main CPU, and the main CPU can control the working state of the ICs by IIC bus.

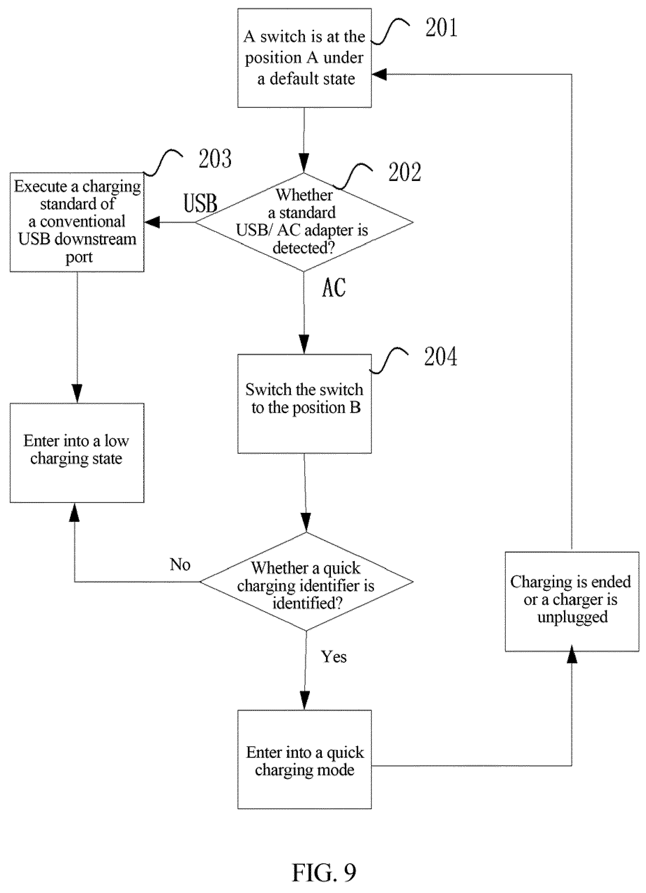

FIG. 9 is a flow chart of a charging method executed by a charging load according to an application example of the present invention. As shown in FIG. 9, the method includes the following steps.

In step 201, in the default state, the CPU small system 15 de-enables a type identification function of a USB charger via the IIC Bus, switches the intelligent bus changeover switch 14 at the position A, and connects the DP and DM pins of the micro-USB connecter 11 to the pins of the CPU small system 15.

In step 202, when the charging load is plugged into the USB interface charger, the CPU small system 15 identifies whether the plugged charging load is the a USB downstream standard port or an AC charging adapter; if the plugged charging load is identified to be the USB downstream standard port, it is proceeded to step 203; if the plugged charging load is identified to be the AC charging adapter, it is proceeded to step 204.

In step 203, the default state is maintained, and the charging load is charged according to a standard of USB downstream port.

In step 204, the CPU small system 15 controls the intelligent bus changeover switch 14 to be switched at the position B through the IIC bus, the DP and DM are in the short-circuit state, which represents that the charging load supports the quick charging mode.

At this point, if the AC charging adapter can identify the quick charging identifier of the charging load correctly, the charging load enters into the quick charging mode; If the AC charging adapter cannot identify the quick charging identifier correctly, the charging load enters into the slow charging mode. After the charging is completed or the charging is interrupted by unplugging the USB line, the charging load restores to the default state.

In order to further describe the implementations in details, the embodiments of the following several working scenarios are described according to the principle schematic and working flow chart as follows.

Scenario 1: the scenario of using the AC adapter in the embodiment of the present invention and a charging load which is not in the embodiment of the present invention cooperatively.

When an ordinary load supporting a USB interface charging is plugged into the charging load, the charging load side can send signals at the DP/DM, and detects the signal changes of the DP/DM to determine whether the ordinary load plugged into the charging load is an AC adapter or a USB downstream standard port, as shown in FIG. 1, since a changeover switch on the AC adapter side is switched to the position A by default, and DP and DM are short-connected by an external resistor, the charging load can identify an AC adapter charging mode (for details of adapter identification, please see battery charging specification of USB interface). Meanwhile, the charging load does not support the quick charging mode in the embodiment of the present invention, and an intelligent bus changeover switch of the present invention (e.g. LCLC824206/205) does not exist, and the DP and DM are connected onto a physical layer (PHY) of a USB interface of a main CPU at the charging load side. The intelligent Bus changeover switch at the AC adapter side cannot detect a charger plugged on the DP and DM, and also cannot identify changes of charging modes, the default state is maintained, and corresponding AC-DC conversion unit outputs default output power 5V@1.5A/5V@1A, that is, lithium battery charging in the conventional sense, the slow charging mode in the embodiments.

Scenario 2: the scenario of using a charging load in the embodiment of the present invention and the AC adapter or USB standard downstream port which is not in the embodiment of the present invention cooperatively.

When the charging load in the embodiment of the present invention is plugged into an ordinary AC adapter or USB standard downstream port, since the intelligent bus changeover switch at the charging load side is switched at position A by default, the physical lines of DP and DM are connected onto a physical layer (PHY) of a USB interface of the main CPU, and functions of the USB interface can be available normally, the main CPU can correctly identify whether an ordinary AC adapter or a USB downstream standard port is plugged according to the charging specification of USB interface. If the USB standard downstream port is identified, the changeover switch maintains the default state, and the charging load charges according traditional mode (namely slow charging mode) for the USB standard downstream port. If the AC adapter is identified, the changeover switch at the charging load side switches to the position B and the DP and DM are shorted., which would not affect the charging, that is, entering into a slow quick state of an AC adapter mode. After the charging is completed or charging load is disconnected, the AC adapter and the intelligent bus changeover switch are switched to the default state.

Scenario 3: the scenario of using a charging load and an adapter in the embodiment of the present invention cooperatively.

The charging load in the embodiment of the present invention is plugged into an AC adapter in the embodiment of the present invention, the intelligent interface bus changeover switch 03 shown in FIG. 1 is switched at position A, and the intelligent interface bus changeover switch 14 shown in FIG. 2 is switched at position A. The charging load firstly detects that the DP and DM at the AC adapter sided are shorted, and an AC charger mode is identified, then the charging load switches the intelligent interface bus changeover switch 14 at the position B. After switching the intelligent interface bus changeover switch 14 at the position B, the DP and DM are shorted by a resistor. The intelligent interface bus changeover switch 03 at the AC adapter side can detect the shorted state between the DP and DM for identifying that the charging load supports the quick charging mode, and further can notify the AC-DC controller 05 adjusting the output power of the AC-DC conversion unit. For example, the output can be adjusted from conventional 5V@1A to 9V@1A, and the output power can be increased from 5 W to 9W, thus, the input power of the charging load can be increased, and charging current can be increased correspondingly to achieve the quick charging. After the charging is completed or the charger disconnects from the charging load, the AC adapter and the intelligent Bus changeover switch for the charging load are switched to the default state.

It can be understood by those skilled in the art that all or part of steps in the above-mentioned methods can be fulfilled by programs instructing the relevant hardware, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present invention is not limit to any specific form of the combination of the hardware and software.

The preferred embodiments of the present invention has been described in detail in the above, it should be illustrated that the present invention can have a variety of other embodiments. Those skilled in the art can make the corresponding modifications and variations according to the present invention without departing from the spirit and essence of the present invention. And all of these modifications or the variations should fall within the scope of the appending claims of the present invention.

### Industrial Applicability

The technical scheme can be achieved by merely adding a bus changeover switch on the traditional charging adapter and charging load, which is simple and easy; a quick charging mode achieved by a USB connecter interface mode can be applicable to the charging requirements of the mobile portable electronic products, and the technology can be easily to be promoted and implemented; the technical scheme conforms to charging specification for the USB battery, and has better reliability with respect to related technologies like the voltage comparing, pulse group detection and pulse counting mode; the method and physical implementation in the embodiments of the present invention can form a unified standard easily; and the embodiments in the present invention can also implement a bus communication between a charger and a charging load to realize a more intelligent charging manner in relevant summary of invention and embodiments. Therefore, the present invention has strong industrial applicability.

## Claims

1. An alternating current adapter, comprising: a micro- Universal Serial Bus (USB) connector, a conversion module, a changeover switch and a control module, wherein:
the micro-USB connector is configured to connect to an external terminal and charge the external terminal;
the conversion module, connecting to a power supply pin of the micro-USB connector, is configured to convert an accessed alternating current to a direct current, output the direct current to the micro-USB connector as an output, and boost a voltage to a designated value after receiving a voltage boosting instruction from the control module;
the changeover switch is configured to connect two differential signal lines of the micro-USB connector to a resistor under a normal default situation, and when the micro-USB connector is connected to the external terminal, detect whether the two differential signal lines of the micro-USB connector are in a short-circuit state, and if the two differential signal lines of the micro-USB connector are in the short-circuit state, trigger the control module and disconnect the two differential signal lines of the micro-USB connector from the resistor; and
the control module is configured to send the voltage boosting instruction to the conversion module after the control module is triggered.

2. The alternating current adapter according to claim 1, wherein:
the changeover switch is further configured to, if the external terminal is detected to disconnect from the micro-USB connector or the external terminal is detected to complete the charging, notify the control module and connect the two differential signal lines of the micro-USB connector to the resistor;
the control module is further configured to, after receiving a notification, send a voltage recovery instruction to the conversion module; and
the conversion module is further configured to, adjust the voltage to a default value after receiving the voltage recovery instruction.

3. The alternating current adapter according to claim 1 or 2, wherein:
a value of the resistor is 0 Ohm or less than 100 Ohms.

4. A charging method, applied to an alternating current adapter according to any one of claims 1 to 3, comprising:
accessing, by the alternating current adapter, to a terminal;
detecting, by the alternating current adapter, whether the terminal supports quick charging; if the terminal does not support the quick charging, charging the terminal with an default output voltage; if the terminal support the quick charging, boosting an output voltage to a designated value to charge the terminal.

5. The charging method according to claim 4, wherein the step of detecting, by the alternating current adapter, whether the terminal supports quick charging comprises:
detecting, whether two differential signal lines of a micro- Universal Serial Bus (USB) connector connected to the terminal are in a short-circuit state; if the two differential signal lines of the micro-USB connector are in the short-circuit state, determining that the terminal supports the quick charging; otherwise, determining that the terminal does not support the quick charging.

6. A charging management device, applied to a terminal, comprising a micro-Universal Serial Bus (USB) connector, a changeover switch and a control module, wherein:
the micro-USB connector is configured to connect to a charging device and charge a terminal;
the changeover switch is configured to connect two differential signal lines of the micro-USB connector to the control module under a default situation, and after receiving a switching signal form the control module, connect the two differential signal lines of the micro-USB connector to a resistor ; and
the control module is configured to detect whether the charging device connected to the micro-USB connector is an alternating current adapter; if the charging device is the alternating current adapter, output the switching signal to the changeover switch.

7. The charging management device according to claim 6, wherein:
the control module is further configured to, if the terminal is detected to complete the charging or the micro-USB connector is detected to disconnect from the charging device, notify the changeover switch; and
the changeover switch is further configured to, after receiving a notification, connect the two differential signal lines of the micro-USB connector to the control module.

8. The charging management device according to claim 6 or 7, wherein,
a value of the resistor is 0 Ohm or less than 100 Ohms.

9. A terminal, comprising a charging management device according to any one of claims 6-8.

10. A charging method, applied to a charging management device according to any one of claims 6-8, comprising:
detecting, by a charging management device, the type of an accessed device; and
if the accessed device is detected to be an alternating current adapter, sending, by the charging management device, a quick charging identifier to the alternating current adapter.

11. The charging method according to claim 10, wherein the step of sending, by the charging management device, a quick charging identifier to the alternating current adapter comprises:
connecting, by the charging management device, two differential signal lines of a micro- Universal Serial Bus (USB) connector connected to the alternating current adapter to a resistor; wherein, a value of the resistor is 0 Ohm or less than 100 Ohms.
